# EUROPÄISCHE PATENTSCHRIFT

(11) **EP 2 051 242 B1**
(45) Veröffentlichungstag und Bekanntmachung des Hinweises auf die Patenterteilung: **06.07.2011**
(21) Anmeldenummer: 09000392.2
(22) Anmeldetag: 13.12.2006
(51) Int. Cl.: G10L 15/22, G10L 13/08

(54) **Verfahren zur Erzeugung von Sprachmustern für eine sprachgesteuerte Senderwahl**
Method for generating speech patterns for speech controlled station tuning
Génération d'échantillons vocaux pour une sélection de chaîne commandée par reconnaissance vocale

(30) Priorität: 14.12.2005 DE 102005059630
(43) Veröffentlichungstag der Anmeldung: 22.04.2009
(62) Teilanmeldung aus: 06025872.0
(73) Patentinhaber: Bayerische Motoren Werke Aktiengesellschaft, 80809 München (DE)
(72) Erfinder: Huber, Alexander, Dr., 85386 Eching (DE); Eckert, Jochen, Dr., 81667 München (DE)

(56) Entgegenhaltungen:
- EP-B1- 0 911 808
- US-A1- 2005 043 067
- "RADIO SYSTEM WITH CODED DATA AND SPEECH-RECOGNITION" IBM TECHNICAL DISCLOSURE BULLETIN, IBM CORP. NEW YORK, US, Bd. 38, Nr. 7, Juli 1995 (1995-07), Seiten 331-332, XP000521709 ISSN: 0018-8689

## Beschreibung

Die Erfindung betrifft ein Verfahren zur Erzeugung von Sprachmustern für eine sprachgesteuerte Senderwahl bei einem Empfangsgerät.

Sprachsteuerungsfunktionen sind für Empfangsgeräte, insbesondere Radio- und Fernsehempfangsgeräte, sowohl im Home-Entertainment-Bereich als auch in Kraftfahrzeugen bekannt.

Die Sprachsteuerung bei Empfangsgeräten ermöglicht einem Benutzer beispielsweise eine freie Senderwahl durch bloßes Sprechen des jeweiligen Sendernamens. Dazu werden im System bekannte Sendernamen als Sprachmuster abgelegt. Die Sprachmuster sind jeweils einem Sender, beispielsweise einem Radiokanal, zuordenbar. Wenn eine für das Empfangsgerät vernehmbare Äußerung eines Benutzers nun einem der abgelegten Sprachmuster entspricht, schaltet das Empfangsgerät auf den zugeordneten Sender.

Die Sprachsteuerung von Empfangsgeräten ist auch in Kraftfahrzeugen bekannt, beispielsweise aus der DE 44 27 444 A1 und der DE 101 11 121 B4.

Nachteilig an bekannten Verfahren für die sprachgesteuerte Senderwahl bei Empfangsgeräten ist die Tatsache, dass für jeden Sender, der durch Sprachsteuerung auswählbar sein soll, ein Sprachmuster erzeugt werden muss. Dieses Sprachmuster muss in der Regel in einem mühsamen Erfassungsprozess von einem Benutzer gesprochen und dem Sender zugeordnet werden.

Aus der WO 2005/022510 A2 ist ein Verfahren bekannt, gemäß welchem Sprachmuster von einem Rundfunksender an einen Empfänger übertragen werden. Dabei ist aufgrund des großen Datenvolumens eines Sprachmusters in einer Qualität, die für eine Spracherkennung ausreicht, eine sehr große Datenmenge zu übertragen. Zudem sind die durch den Rundfunksender bereitgestellten Sprachmuster nicht bzw. nur schwer an spezielle Begebenheiten oder Nutzungsgewohnheiten des Nutzers eines bestimmten Empfangsgeräts anpassbar.

**Aus dem Dokument "**Radio System with Coded Data and Speech Recognition", IBM Technical Disclosure Bulletin; Bd. 38, Nr. 7, Juli 1995, Seiten 331-332**, ist ein Verfahren zur Erzeugung von Sprachmustern für eine sprachgesteuerte Senderwahl bei einem Empfangsgerät bekannt, bei dem einem Sender zugeordnete textuelle Identifikationsdaten bei einem Empfangsgerät in ein dem Sender zuordenbares Sprachmuster umgewandelt werden.**

Aufgabe der Erfindung ist es, ein einfaches Verfahren zur Erzeugung von Sprachmustern für eine sprachgesteuerte Senderwahl bei einem Empfangsgerät zu schaffen.

Gelöst wird diese Aufgabe erfindungsgemäß durch ein Verfahren gemäß dem Anspruch 1.

Vorteilhafte Ausführungsformen und Weiterbildungen der Erfindung ergeben sich aus den abhängigen Ansprüchen.

Die Erfindung basiert auf dem Gedanken, textuelle Identifikationsdaten eines Senders zur Erzeugung eines Sprachmusters zu nutzen. Solche textuellen Identifikationsdaten sind vielen Sendern bereits gemäß dem Stand der Technik zuordenbar bzw. zugeordnet. Beispielsweise wird beim so genannten Radio-Data-System (RDS) zumindest der Name eines Senders zusammen mit dem eigentlichen Datenstrom des Senders übertragen.

Erfindungsgemäß findet die Umwandlung empfängerseitig statt. Es muss daher nicht ein fertiges Sprachmuster mit dem eigentlichen Datenstrom des Senders ausgestrahlt werden.

Sofern die textuellen Identifikationsdaten nicht selbst mit dem eigentlichen Datenstrom des Senders übertragen werden, kann ein Sender auf andere Art und Weise identifizierbar sein. Ein identifizierter Sender kann dann entsprechend seiner Identität erst bei dem Empfangsgerät mit textuellen Identifikationsdaten versehen werden.

Die Identifikation kann bei einer solchen Ausführungsform der Erfindung anhand anderer (z.B. kürzerer und/oder insbesondere im Hinblick auf Eindeutigkeit gewählter) textueller Identifikationsdaten erfolgen. Bevorzugt erfolgt die Identifikation des Senders bei einer solchen Ausführungsform der Erfindung aber anhand einer nicht-textuellen Senderkennung. Da die Senderkennung nicht zur Anzeige oder zur unmittelbaren Erzeugung eines Sprachmusters vorgesehen ist, kann eine insbesondere im Hinblick auf Eindeutigkeit gewählte Senderkennung verwendet werden oder auch erst zum Zweck der Erfindung festgelegt werden. Zur Identifikation eines Radiosendern eignet sich beispielsweise besonders der so genannte Pl-Code, der in der Regel zusammen mit dem eigentlichen (akustischen) Datenstrom eines Radiosenders ausgestrahlt wird. Der PI-Code eines Radiosenders erlaubt eine eindeutige Identifikation des Senders. Vorzugsweise wird bei einer solchen Ausführungsform der Erfindung der PI-Code nach EN 50067 verwendet.

Wird ein Sender zunächst anhand einer ausgestrahlten eindeutigen Senderkennung identifiziert, können ihm bei dem Empfangsgerät sehr einfach - beispielsweise durch Abruf aus einer Look-Up-Table - textuelle Identifikationsdaten zugeordnet werden, die anschließend in ein Sprachmuster umgewandelt werden. Dies gilt insbesondere, wenn es sich bei der Senderkennung um einen PI-Code handelt.

Gemäß der Erfindung werden zur Erzeugung eines Sprachmusters die einem Sender zugeordneten textuellen Identifikationsdaten durch Graphem-zu-Phonem-Wandlung in ein dem Sender zuordenbares Sprachmuster umgewandelt. Die aus dem Stand der Technik, jedoch nicht im Zusammenhang mit der Senderwahl von Empfangsgeräten, bekannte Graphem-zu-Phonem-Wandlung (kurz: G2P) erlaubt eine Wandlung der textuellen Identifikationsdaten in ein Sprachmuster, welches unter Zuordnung zu dem jeweiligen Sender abgelegt werden kann. Das so erzeugte Sprachmuster kann dann zur sprachgesteuerten Auswahl des Senders dienen.

Vorzugsweise werden einem einzigen Sender mehrere Sprachmuster zugeordnet, beispielsweise Namensalternativen und/oder verschiedene Sprechweisen desselben Namens. Jedes der Sprachmuster kann dann zur sprachgesteuerten Auswahl des Senders dienen. Der Sprecher hat somit eine höhere Wahrscheinlichkeit, einen Sender, dessen Namen er nicht genau kennt, erfolgreich sprachgesteuert auszuwählen. Verschiedene Sprechweisen eines Namens können sich beispielsweise aus den für unterschiedliche Sprachen typischen Sprechweisen ergeben. Beispielsweise kann das im Namen eines Radiosenders enthaltene Wort "Energy" bzw. "Energie" bei der G2P-Wandlung gemäß deutscher, französischer und englischer Sprechweise gewandelt werden.

Gemäß einer besonders bevorzugten Ausführungsform der Erfindung werden aus den textuellen Identifikationsdaten, welche einem einzigen Sender zugeordnet bzw. zuordenbar sind, mehrere Sprachmuster durch Graphem-zu-Phonem-Wandlung gewonnen. Die textuellen Identifikationsdaten können hierzu in mehrere textuelle Teildatensätze aufgeteilt werden. Beispielsweise kann ein aus mehreren Wörtern zusammengesetzter Sendername wortweise aufgeteilt werden. Zumindest einer der Teildatensätze, gegebenenfalls auch alle Teildatensätze, kann dann durch Graphem-zu-Phonem-Wandlung in ein dem Sender zuordenbares Sprachmuster umgewandelt werden.

Zur Gewinnung von Sprachmustern aus textuellen Identifikationsdaten eines Senders werden die textuellen Identifikätionsdaten verküurzt. Beispielsweise können die Anfangsbuchstaben der in einem Sendernamen oder in einer Senderbeschreibung enthaltenen Wörter extrahiert und jeweils und/oder gemeinsam in Sprachmuster umgesetzt werden. Gleichermaßen kann mit Anfangssilben verfahren werden. Auch andere dem schiftsprachlichen oder umgangssprachlichen Gebrauch entsprechende Abkürzungen sowie Kosenamen sind denkbar. Es wird also aus den einem Sender zugeordneten textuellen Identifikationsdaten durch Verkürzung zumindest ein textueller Kurzdatensatz gewonnen und der Kurzdatensatz wird durch Graphem-zu-Phonem-Wandlung in ein dem Sender zuordenbares Sprachmuster umgewandelt.

Grundsätzlich kann ein durch Aufteilung und/oder Verkürzung der textuellen Identifikationsdaten eines Senders gewonnenes Sprachmuster als einziges oder zusätzliches Sprachmuster zur Auswahl des Senders dienen.

Im Falle mehrerer einem einzigen Sender zugeordneter Sprachmuster können unterschiedliche Sprachmuster durch unterschiedliche Verfahren erzeugt werden. Beispielsweise kann zumindest ein Sprachmuster in konventioneller Weise, beispielsweise von einem Benutzer gesprochen und aufgenommen, werden. Zusätzlich können die dem Sender zugeordneten textuellen Identifikationsdaten durch Graphem-zu-Phonem-Wandlung in zumindest ein weiteres dem Sender zuordenbares Sprachmuster umgewandelt werden.

Vorzugsweise findet ein erfindungsgemäßes Verfahren insbesondere dann Anwendung, wenn - etwa in einer Sendertabelle eines Empfangsgeräts - ein Sender erkannt wird, für den kein in konventioneller Weise erzeugtes, beispielsweise von einem Benutzer gesprochenes und aufgenommenes, Sprachmuster vorhanden bzw. hinterlegt ist.

Vorzugsweise werden von einem sprachgesteuerten Empfangsgerät nur diejenigen Sprachmuster freigeschaltet, d. h. für eine Sprachsteuerung herangezogen, welche Sendern zugeordnet sind, die in der aktuellen Situation erkannt werden. Durch die somit verringerte Anzahl der aktiven Sprachmuster kann die Qualität der Spracherkennung verbessert werden. Zur Unterstützung eines Benutzers können die aktuell freigeschalteten Sprachmuster textuell auf einer optischen Anzeigeeinheit angezeigt werden. Dies ist insbesondere deshalb hilfreich, da dem Benutzer unter Umständen durch Sprachwahl die Auswahl von Sendern möglich ist, deren Verfügbarkeit dem Benutzer nicht bekannt ist. Schließlich hat er die jeweiligen Sprachmuster nicht selbst erzeugt, sondern sie wurden erfindungsgemäß erzeugt.

Der Benutzer kann auch in an sich bekannter Weise, etwa optisch oder akustisch, über die erfindungsgemäße Erzeugung eines Sprachmusters informiert werden. Es kann auch eine Erlaubnis- und/oder Bestätigungsaktion des Benutzers herausgefordert werden.

Vorzugsweise findet die Erfindung Anwendung auf die sprachgesteuerte Auswahl von Radiosendern. Der Sender ist dann ein Radiosender bzw. Radiokanal, das Empfangsgerät ein Radioempfänger. Für Radiosender und Radioempfänger ist der Gebrauch des so genannten Radio-Data-Systems (RDS) zur Übertragung von Zusatzdaten, welche über den eigentlichen Datenstrom des Senders hinausgehen, verbreitet. Die Zusatzdaten, insbesondere der darin enthaltene Sendername, stellen ganz oder teilweise textuelle Identifikationsdaten im Sinne der Erfindung dar. Dementsprechend werden gemäß einer möglichen Ausführungsform der Erfindung die textuellen Identifikationsdaten direkt aus Daten eines Radio-Data-Systems (RDS) gewonnen.

Gemäß einer anderen möglichen Ausführungsform der Erfindung kann zunächste eine Senderidentifikation über den so genannten PI-Code eines Radiosenders erfolgen. Dies ist insofern vorteilhaft, als die PI-Codes von Radiosendern im Gegensatz zu RDS-Daten einen Sender ein-eindeutig identifizieren. RDS-Daten hingegen werden häufig für so genannten "Radio-Text" missbraucht.

Weiterhin lässt sich das Konzept der Erfindung auf Sender bei DAB, DVB-T oder analogem Fernsehen übertragen, da auch hier jeweils eine Zuordnung textueller Identifikationsdaten zu einem Sender möglich ist. Die Erfindung kann also auch Anwendung auf die sprachgesteuerte Auswahl von Fernsehsendern finden. Der Sender im Sinne der Erfindung ist dann ein Fernsehsender bzw. Fernsehkanal.

Gemäß einer Weiterbildung der Erfindung wird ein Sender, welcher textuelle Zusatzinformation überträgt, einem vorgegebenen Satz von Identifikationsdaten und/oder einem Sprachmuster zugeordnet. Wenn beispielsweise ein Radiosender zusätzlich zu seinem Namen auch Wetterdaten oder Werbung per Fließtext sendet, kann dieser etwa einem bestimmten Stationsnamen und/oder einer bestimmten Kategorie zugeordnet werden (z. B. "Wetter" oder "Local-01"). Weitere Sender dieser Art können fortlaufend nummeriert werden (z. B. "Local-02" etc.). Aus dem Stationsnamen bzw. der Kategorie kann dann wieder durch Graphem-zu-Phonem-Wandlung ein dem Sender zuordenbares Sprachmuster erzeugt werden. Alternativ kann bereits ein dem Stationsnamen bzw. der Kategorie zugeordnetes Sprachmuster vorgehalten werden, da diese(r) ja fest vorgegeben sein kann. Ein solcher Sender kann auch direkt einem bestimmten Sprachmuster (z. B. "Wetterkanal") zugeordnet werden, über welches er dann sprachgesteuert auswählbar ist.

Für einen Sender, der textuelle Zusatzinformation im Sinne des vorangehenden Abschnitts überträgt und dem außerdem textuelle Identifikationsdaten zugeordnet sind, kann zusätzlich zur im vorangehenden Abschnitt beschriebenen Zuordnung auch zumindest ein Sprachmuster auf Basis der textuellen Identifikationsdaten erzeugt werden. Ein solcher Sender kann dann sprachgesteuert beispielsweise sowohl über einen festen Stationsnamen (z. B. "Local-01") als auch über seinen eigentlichen Sendernamen aufrufbar sein.

Auch einem anhand einer eindeutigen Senderkennung - etwa anhand eines PI-Codes - einer bestimmten Kategorie von Sendern zuordenbaren Sender kann ein vorgegebenes Sprachmuster entsprechend dieser Kategorie zugeordnet werden. Wird beispielsweise ein Sender anhand seines PI-Codes als Kanal erkannt, der als akustischen Datenstrom oder als Fließtext Wetternachrichten überträgt, kann diesem Sender entsprechend der Kategorie "Sender mit Wetternachrichten" ein Sprachmuster ("Wetterkanal" oder "Wetter-01") zugeordnet werden.

Durch die Erfindung wird eine hohe Verfügbarkeit der Möglichkeit zur Sprachsteuerung erreicht, da Sender, welche zunächst nicht mit Sprachmustern hinterlegt sind, durch Graphem-zu-Phonem-Wandlung mit Sprachmustern versehen werden können und somit einer Sprachsteuerung zugänglich gemacht werden.

Die Erfindung erlaubt in vielen Fällen auch eine vereinfachte Sprachanwahl von Sendern durch Berücksichtung des Sprachgebrauchs. Beispielsweise kann ein Sender sowohl aufgerufen werden durch eine benutzerindividuelle Benennung, die der Benutzer selbst als Sprachmuster aufgenommen hat, als auch durch zumindest ein aus textuellen Identifikationsdaten abgeleitetes - und somit vom Benutzer unabhängiges - Sprachmuster.

Die Erfindung erlaubt auch ein variables Freischalten der Sprachmuster bzw. Sprachkommandos gemäß Empfangssituation. Neu erkannte Sender können umgehend automatisch mit Sprachmustern versehen werden. Den Sprachmustern derzeit nicht empfangbarer Sender kann temporär die Freischaltung entzogen werden.

Die Erfindung bietet große Vorteile insbesondere für Empfangsgeräte in Kraftfahrzeugen. Beispielsweise muss beim erstmaligen Befahren des Sendebereichs eines Senders kein Sprachmuster aufgenommen werden, um den Sender einer Sprachsteuerung zugänglich zu machen.

Die Erfindung bietet auch große Vorteile bei wechselnden Benutzern eines Empfangsgeräts, beispielsweise in einem Kraftfahrzeug, insbesondere einem Mietfahrzeug. Die durch Graphem-zu-Phonem-Wandlung erzeugten Sprachmuster sind vom jeweiligen Benutzer unabhängig und sind somit von jedermann nutzbar, der den Namen eines Senders oder einen Teil desselben oder eine Abkürzung für diesen kennt.

Anhand eines bevorzugten Ausführungsbeispiels der Erfindung wird die Erfindung im Folgenden näher erläutert.

Ein Radiosender mit dem Namen "Funkanstalt Bayern" überträgt zusammen mit dem eigentlichen akustischen Radiosignal RDS-Daten. Die RDS-Daten enthalten textuelle Identifikationsdaten, nämlich zumindest den Sendernamen "Funkanstalt Bayern".

Ein Radioempfangsgerät, welches zur Ausführung eines erfindungsgemäßen Verfahrens geeignet ist, gelangt nun in den Sendebereich des Senders "Funkanstalt Bayern". Das Empfangsgerät empfängt den Sender und erkennt durch einen Abgleich mit einer gespeicherten Senderliste, dass kein Sprachmuster für den Sender hinterlegt ist.

Zur Erzeugung von Sprachmustern für eine sprachgesteuerte Senderwahl wandelt das Empfangsgerät nun zunächst durch Graphem-zu-Phonem-Wandlung den vollständigen Sendernamen "Funkanstalt Bayern" in ein erstes dem Sender zugeordnetes Sprachmuster um.

Außerdem zerlegt das Empfangsgerät den Sendernamen in zwei textuelle Teildatensätze, nämlich "Funkanstalt" und "Bayern". Das Wort "Funkanstalt" wird durch Graphem-zu-Phonem-Wandlung in ein zweites dem Sender zugeordnetes Sprachmuster umgewandelt. Das Wort "Bayern" hingegen wird nicht umgewandelt, da es - wie das Empfangsgerät erkennt - auch in anderen Sendernamen enthalten ist.

Schließlich gewinnt das Empfangsgerät aus dem Sendernamen durch Verkürzung eine Abkürzung, d. h. einen textuellen Kurzdatensatz, nämlich "F.B.". Auch die Abkürzung "F.B." wird durch Graphem-zu-Phonem-Wandlung umgewandelt. So entsteht ein drittes dem Sender zugeordnetes Sprachmuster entsprechend den gesprochenen Einzelbuchstaben F und B (in deutscher Buchstabierweise z. B. gesprochen als "Eff-Be").

Der Radiosender mit dem Namen "Funkanstalt Bayern" ist nun über dreierlei Sprachmuster sprachgesteuert aufrufbar.

## Patentansprüche

1. Verfahren zur Erzeugung von Sprachmustern für eine sprachgesteuerte Senderwahl bei einem Empfangsgerät, bei welchem einem Sender zugeordnete textuelle Identifikationsdaten bei dem Empfangsgerät durch Graphem-zu-Phonem-Wandlung in ein dem Sender zuordenbares Sprachmuster umgewandelt werden,
**dadurch gekennzeichnet,**
**dass** aus den einem Sender zugeordneten textuellen Identifikationsdaten durch Verkürzung zumindest ein textueller Kurzdatensatz gewonnen wird und der Kurzdatensatz durch Graphem-zu-Phonem-Wandlung in ein dem Sender zuordenbares Sprachmuster umgewandelt wird.

2. Verfahren nach Anspruch 1, **dadurch gekennzeichnet,**
**dass** die textuellen Identifikationsdaten dem Sender bei dem Empfangsgerät anhand einer mit dem Datenstrom des Senders übertragenen eindeutigen Senderkennung zugewiesen werden.

3. Verfahren nach einem der Ansprüche 1 bis 2, **dadurch gekennzeichnet,**
**dass** es sich bei dem Sender um einen Radiosender handelt.

4. Verfahren nach Anspruch 3, **dadurch gekennzeichnet,**
**dass** die textuellen Identifikationsdaten dem Radiosender bei dem Empfangsgerät anhand eines mit dem Datenstrom des Radiosenders übertragenen PI-Codes zugewiesen werden.

5. Verfahren nach Anspruch 3, **dadurch gekennzeichnet,**
**dass** die textuellen Identifikationsdaten aus Daten eines Radio-Data-Systems (RDS) gewonnen werden.

6. Verfahren nach einem der Ansprüche 1 bis 5, **dadurch gekennzeichnet,**
**dass** einem einzigen Sender mehrere Sprachmuster zugeordnet werden.

7. Verfahren nach einem der Ansprüche 1 bis 6, **dadurch gekennzeichnet,**
**dass** aus den einem einzigen Sender zugeordneten textuellen Identifikationsdaten mehrere Sprachmuster durch Graphem-zu-Phonem-Wandlung gewonnen werden.

8. Verfahren nach einem der Ansprüche 1 bis 7, **dadurch gekennzeichnet, dass** das Empfangsgerät in einem Kraftfahrzeug angeordnet ist.

## Claims

1. A method for generating speech patterns for a speech-controlled transmitter selection in a receiver, in which textual identification data associated with a transmitter is converted in the receiver by grapheme to phoneme conversion into a speech pattern which can be associated with the transmitter, **characterised in that** at least one textual short data set is obtained by abbreviation from the textual identification data associated with a transmitter and the short data set is converted by grapheme to phoneme conversion into a speech pattern which can be associated with the transmitter.

2. A method according to claim 1, **characterised in that** the textual identification data is allocated to the transmitter in the receiver with the aid of a clear transmitter identification transmitted with the data stream of the transmitter.

3. A method according to either of claims 1 or 2, **characterised in that** the transmitter is a radio transmitter.

4. A method according to claim 3, **characterised in that** the textual identification data is allocated to the radio transmitter in the receiver with the aid of a PI code transmitted with the data stream of the radio transmitter.

5. A method according to claim 3, **characterised in that** the textual identification data is obtained from data of a radio data system (RDS).

6. A method according to any one of claims 1 to 5, **characterised in that** a plurality of speech patterns is associated with a single transmitter.

7. A method according to any one of claims 1 to 6, **characterised in that** a plurality of speech patterns is obtained by grapheme to phoneme conversion from the textual identification data associated with a single transmitter.

8. A method according to any one of claims 1 to 7, **characterised in that** the receiver is arranged in a motor vehicle.

## Revendications

1. Procédé pour générer des motifs vocaux pour une sélection d'émetteurs à commande vocale dans un récepteur, selon lequel des données d'identification textuelle associées à un émetteur sont converties dans le récepteur par une conversion graphèmes/phonèmes en un motif vocal associé à l'émetteur,
**caractérisé en ce que**
les données d'identification textuelle associées à un émetteur, sont obtenues en abrégeant au moins un jeu de données textuelles, et
le jeu de données abrégées est converti en un motif vocal associé à l'émetteur par une conversion graphèmes/phonèmes.

2. Procédé selon la revendication 1,
**caractérisé en ce que**
les données d'identification textuelle sont attribuées à l'émetteur par le récepteur à l'aide d'une reconnaissance univoque d'émetteur transmise avec le flux de données de l'émetteur.

3. Procédé selon l'une des revendications 1 et 2,
**caractérisé en ce que**
l'émetteur est un émetteur radio.

4. Procédé selon la revendication 3,
**caractérisé en ce que**
les données d'identification textuelle sont attribuées à l'émetteur radio par le récepteur à l'aide d'un code (PI) transmis avec le flux de données de l'émetteur radio.

5. Procédé selon la revendication 3,
**caractérisé en ce que**
les données d'identification textuelle, sont récupérées à partir des données d'un système de données radio (RDS)

6. Procédé selon l'une des revendications 1 à 5,
**caractérisé en ce que**
plusieurs motifs vocaux sont associés à l'unique émetteur.

7. Procédé selon l'une des revendications 1 à 6,
**caractérisé en ce qu'**
on obtient plusieurs motifs vocaux par conversion graphèmes/phonèmes, à partir des données d'identification textuelle associées à un unique émetteur.

8. Procédé selon l'une des revendications 1 à 7,
**caractérisé en ce que**
le récepteur est installé dans un véhicule automobile.
